# EUROPÄISCHE PATENTSCHRIFT

(11) **EP 1 509 813 B1**
(45) Veröffentlichungstag und Bekanntmachung des Hinweises auf die Patenterteilung: **23.09.2015**
(21) Anmeldenummer: 03756989.4
(22) Anmeldetag: 30.04.2003
(51) Int. Cl.: G03B 21/00, G09F 3/02, G09F 3/03

(54) **FÄLSCHUNGSSICHERE METALLFOLIE**
COUNTERFEIT-PROOF METALLIC FOIL
FEUILLE METALLIQUE INFALSIFIABLE

(30) Priorität: 06.06.2002 AT 8662002
(43) Veröffentlichungstag der Anmeldung: 02.03.2005
(73) Patentinhaber: Constantia Teich GmbH, 3200 Weinburg (AT)
(72) Erfinder: SCHARNER, Engelbert, A-3233 Kilb (AT); KLOSS, Helmut, A-3151 St. Georgen (AT); SCHEDL, Adolf, A-3200 Obergrafendorf (AT); ZUSER, Wilhelm, A-3202 Hofstetten (AT); NEKULA, Lambert, A-3202 Hofstetten (AT)
(74) Vertreter: Beer & Partner Patentanwälte KG
(86) Internationale Anmeldenummer: PCT/EP2003/004524
(87) Internationale Veröffentlichungsnummer: WO 2003/104890

(56) Entgegenhaltungen:
- EP-A- 0 563 992
- EP-A- 0 794 522
- EP-A- 0 799 654
- EP-A- 0 892 288
- EP-A- 1 150 270
- WO-A-01/11435
- WO-A-01/94698
- WO-A-99/26785
- US-A- 4 725 111
- US-A- 5 388 862
- US-A- 5 403 040
- US-A- 6 153 316

## Beschreibung

Die Erfindung betrifft ein Verfahren zur Herstellung einer fälschungssicheren Metallfolie, welche in einem vorgegebenen Teilbereich ihrer Oberfläche strukturiert ist, wobei dieser Bereich eine im Vergleich mit dem übrigen Oberflächenbereich unterschiedliche Beugung, Streuung, Brechung oder Reflexion von Licht aufweist, und wobei die Metallfolie durch Walzen mittels Arbeitswalzen hergestellt wird, wodurch sich in Laufrichtung die längs gerichtete Struktur der Walzenoberfläche auf die Oberfläche der Metallfolie überträgt.

### Stand der Technik

Die Bearbeitung von Metallfolien ist aus vielerlei technischen Anwendungsgebieten bekannt.

Gemäß der EP-A 892 288 werden strukturierte Metallfolien hergestellt, welche das Reflexionsverhalten von Lichtquellen verbessern sollen. Ebenso ist es Aufgabe der EP-A 799 654 durch Maßgabe einer strukturierten Metallfolie die einfallenden Lichtstrahlen derart umzulenken, dass die Helligkeit in einem an sich dunklen Raum erhöht wird.

Gemäß der US-A 6 153 316 werden unregelmäßig strukturierte Metallfolien hergestellt, welche das Reflexionsverhalten von Lichtquellen verbessern sollen. Bei diesem Herstellungsverfahren werden Arbeitswalzen eingesetzt, deren Oberfläche in Längsrichtung strukturiert ist. Diese Strukturierungen werden jedoch zerstört, sodass sich beim Walzen der Metallfolie schuppenförmige Vertiefungen (bumps) an der Folienoberfläche bilden. Dadurch wird jede Art eines streifenförmigen Streuungsmusters vermieden, sodass die erzeugten Folien in der Autoindustrie als Lichtreflektoren verwendet werden.

In der WO-A1 01/11435 wird die Herstellung von Verpackungsfolien mit einheitlich strukturiertem Reliefmuster beschrieben, um einen dekorativen Effekt (Regenbogeneffekt) zu erzielen. Dabei werden Arbeitswalzen eingesetzt, welche an ihrer gesamten Oberfläche eine Strukturierung in Laufrichtung aufweisen, welche beim Walzen der Verpackungsfolie auf deren Oberfläche übertragen wird.

Der Bedarf an fälschungssicherem Verpackungsmaterial, beispielsweise für Arzneimittel, im Laufe der letzten Jahre in so ferne gestiegen, da das Ausmaß an gefälschten Arzneimitteln weltweit relativ stark gestiegen ist. Bei diesen Fälschungen kann es sich um pharmazeutisch aktive Arzneimittel, aber auch um Mittel mit Placeboeffekt handeln.

Es wird daher versucht, wie bei Banknoten bekannt, Verpackungsmaterialien auch für die Pharmaindustrie mit Hologrammen zu versehen.

Gemäß der US-A 4,725,111 werden in einem kontinuierlichen Prägeverfahren Hologramme auf einer Folienoberfläche erzeugt. Wird ein einzelnes Hologramm entlang von Längs- und Quersteifen ausgeschnitten, so kann das Hologramm auch als individuelles Erkennungszeichen, beispielsweise auf einem Behälter dienen.

Allerdings hat es sich gezeigt, dass auch Hologramme, obzwar deren Herstellung relativ aufwendig ist, mit zunehmender technischer Entwicklung gefälscht werden können. Diese Fälschungen können nur von einem Fachmann als solche charakterisiert oder erkannt werden, da es für den Arzneimittelverbraucher selbst nur schwer möglich ist festzustellen, ob das Hologramm gefälscht ist oder nicht, wenn er nicht über ein entsprechendes Vergleichsmuster verfügt.

Unabhängig davon wird versucht, fälschungssichere Verpackungsmaterialien in so ferne herzustellen als die Materialoberfläche mit einer besonderen Beschichtung versehen ist, die durch Strahlung aktivierbare Pigmente aufweist. So kann beispielsweise das Firmenlogo des Herstellers oder die Marke des Arzneimittels durch Strahlen, wie UV- oder IR-Strahlen, sichtbar oder unsichtbar gemacht werden.

Die EP-A2-1 217 091 betrifft Verpackungen mit integrierter Erstöffnungs- und/oder Originalitätsgarantie, welche durch eine Beschichtung erzeugt wird, die auftreffendes Licht reflektiert, so daß je nach Betrachtungsrichtung oder -winkel unterschiedliche Farben wahrgenommen werden.

Die EP-A1-0 967 091 beschreibt eine Beschichtung aus mehreren, aufeinander abgestimmten Rasterbildern, die in Abhängigkeit vom Betrachtungswinkel eine unterschiedliche optische Wahrnehmung erzeugen. Es hat sich jedoch gezeigt, dass auch diese Beschichtungssysteme nachgestellt werden können, so dass auch auf diesem Weg keine zufriedenstellende Fälschungssicherheit, insbesondere hinsichtlich Verpackungsmaterialien für die Pharmaindustrie, erzielt werden konnte.

### Darstellung der Erfindung

Aufgabe der vorliegenden Erfindung ist es nunmehr, die aus dem Stand der Technik bekannten Nachteile zu vermeiden und ein Verfahren zur Herstellung von fälschungssicheren Metallfolien bereitzustellen, bei welchem die für die Herstellung der Metallfolien verwendeten Arbeitswalzen in das Verfahren integriert werden können.

Erfindungsgemäß wird diese Aufgabe mit dem Verfahren der eingangs genannten Art gelöst, welches dadurch gekennzeichnet ist, dass an der Walzenoberfläche, beispielsweise durch Schleifen der Walzenoberfläche, eine Strukturierung in Querrichtung zur Laufrichtung derart erzeugt wird, dass sich der vorgegebene Teilbereich mit in Längs- und Querrichtung einander kreuzenden, linienförmigen Strukturierungen auf der Metallfolie ergibt, welcher eine Änderung in der Lichtbrechung bewirkt.

Weitere vorteilhafte Ausgestaltungen des erfindungsgemäßen Verfahrens sind in den Unteransprüchen 2 bis 4 offenbart.

### Darstellung der Erfindung anhand von Zeichnungen sowie Ausführungsbeispielen

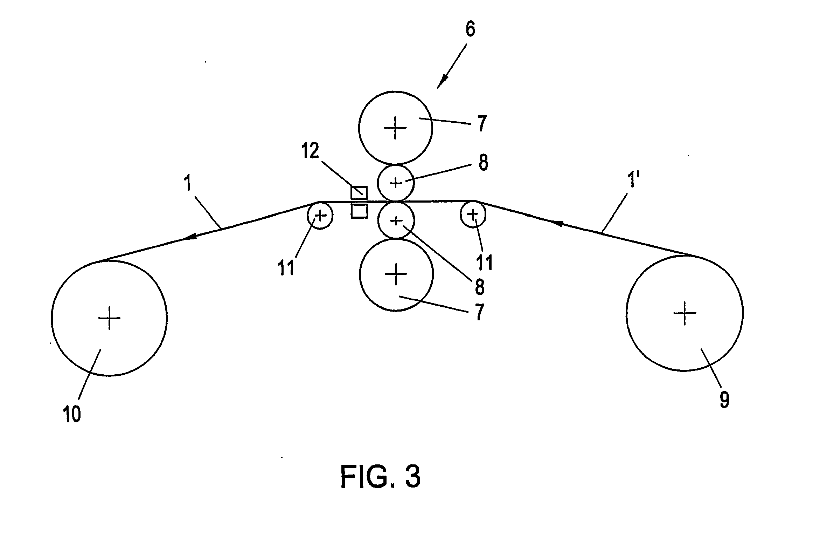

Die Erfindung wird in der Folge anhand der Fig. 1 bis 3 näher erläutert, wobei
Fig. 1 einen Ausschnitt aus einer bekannten fälschungssicheren Metallfolie mit einem flächenhaften Erkennungszeichen 2, nämlich ein Firmenlogo,
Fig. 2 einen Ausschnitt aus der erfindungsgemäß hergestellten fälschungssicheren Metallfolie 1 mit dem strukturierten Teilbereich 4 und
Fig. 3 eine Vorrichtung in Form eines Walzwerkes 6 zur Herstellung der erfindungsgemäßen Metallfolie 1 zeigt.

Im Folgenden wird ein möglicher Weg zur Ausführung der Erfindung näher erläutert.

Ein Ausgangsprodukt zur Herstellung der erfindungsgemäßen Metallfolie, beispielsweise die Aluminiumfolie 1', wird einem Walzwerk 6 zugeführt. Dieses besteht aus den Stützwalzen 7 und den Arbeitswalzen 8. Das Ausgangsprodukt in Form einer Metallfolie 1' wird von der Vorratsrolle, nämlich einer Abhaspel 9 über Umlenkrollen 11 dem Walzspalt zwischen den Arbeitswalzen 8 zugeführt. Durch den angewendeten Druck dieser Arbeitswalzen wird die Dicke der eingesetzten Folie reduziert. So kann beispielsweise eine Aluminiumfolie 1' mit einer Ausgangsstärke von 40 µm in einem Walzvorgang auf 20 µm reduziert werden. Die erzielte Dicke der Folie wird an der Messstation 12 kontrolliert, wobei die Folie 1 in der Folge einer Aufhaspel, also einer weiteren Lagerrolle 10, zugeführt wird. Dieser Walzvorgang kann je nach gewünschter Dicke mehrfach wiederholt werden.

Um nunmehr die erfindungsgemäße Oberflächenstrukturierung zu erzielen, wird im letzten Walzvorgang das Arbeitswalzenpaar gegen ein weiteres Arbeitswalzenpaar 8 ausgetauscht, welches an seiner Oberfläche Strukturierungen entsprechend einem oder mehrerer Teilbereiche, wie sie in der erfindungsgemäß hergestellten, fälschungssicheren Folie 1 erzielt werden sollen, aufweist. Diese Strukturierungen können beispielsweise durch Schleifen an der Arbeitswalzenoberfläche erzeugt werden.

Während des Walzvorganges werden die genannten Strukturierungen unter Anwendung des erforderlichen Verformungsdruckes auf die Metallfolie übertragen, welche dadurch erfindungsgemäß diese Strukturierungen in zumindest einem vorgegebenen Teilbereich ihrer Oberfläche aufweist. Die Strukturierung kann sich freilich auf einen Großteil der Walzenoberfläche erstrecken, sodass nicht nur eine fälschungssichere sondern gleichzeitig eine entsprechend dekorierte Folie erzeugt wird.

Die Strukturierung kann regelmäßig, also mit geometrischer Anordnung, oder nach dem Zufallsprinzip, beispielsweise als Kräusellinien, vorliegen.

Je nach Anwendung können auch beide Oberflächenseiten der Metallfolie strukturiert werden, wofür beide Arbeitswalzen 8 entsprechend mit Strukturierungen ausgebildet sein müssen.

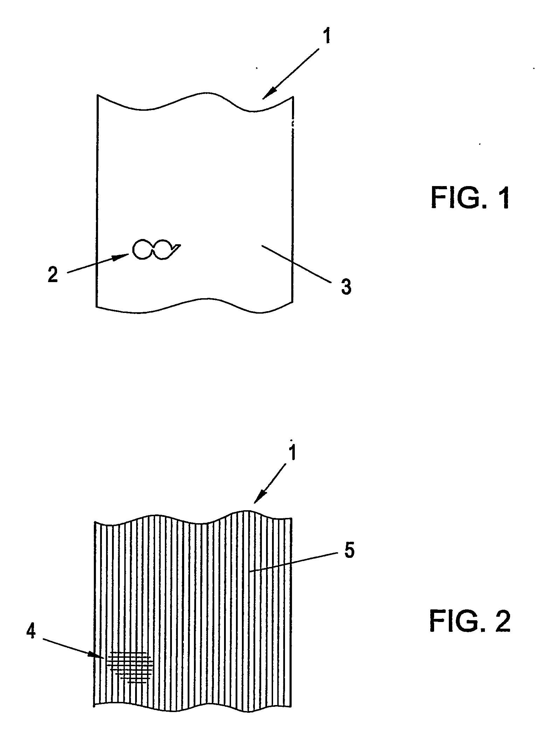

Die Erfindung wird nun anhand einer Ausführungsform der erfindungsgemäß hergestellten Metallfolie 1, wie sie in Fig. 2 dargestellt ist, im Vergleich zur bekannten Ausführungsform nach Fig. 1 näher erläutert.

Bei der bekannten Ausführungsform wird gemäß Fig. 1 eine Oberflächenstrukturierung in Form eines flächenhaften Erkennungszeichens 2, nämlich ein Firmenlogo, wiedergegeben. Dieses unterscheidet sich in seinem Strahlenbrechungswert von der verbleibenden Folienoberfläche 3 und ist mitunter für den Betrachter bereits mit freiem Auge erkennbar. Handelt es sich bei dem Firmenlogo um eines, welches dem Betrachter als Herstellerunternehmen für Verpackungsmaterial bekannt ist, so hat dieser die Gewissheit ein ungefälschtes Erzeugnis erhalten zu haben.

Je nach Oberflächenstrukturierung erfolgt auch eine entsprechende Beugung bzw. Streuung des einfallenden Lichts. Diese ist beispielsweise anhand des gebildeten Reflexionsmusters messbar. Diese Messbarkeit ist besonders dann von Bedeutung, wenn die Oberflächenstrukturierung mit freiem Auge nicht erkennbar ist.

Das erfindungsgemäße hergestellte Erkennungszeichen ist gemäß Fig. 2 offenbart. Da die erfindungsgemäß hergestellten Metallfolien durch einen Walzvorgang erzeugt werden, wodurch sich insbesondere in Laufrichtung die längsgerichtete Struktur 5 der Walzenoberfläche auf die Oberfläche der Metallfolie 1 überträgt, kann beispielsweise durch Schleifen der Walzenoberfläche eine Strukturierung in Querrichtung zur Laufrichtung derart erzeugt werden, dass sich ein strukturierter Teilbereich 4 auf der Metallfolie 1 ergibt, welcher eine Änderung in der Lichtbrechung bewirkt. Wird die vorgegebene Strukturierung im Teilbereich 4 mit einem Muster bzw. mit der Walzenoberfläche verglichen, so kann bei Übereinstimmung ausgeschlossen werden, dass es sich um ein gefälschtes Erzeugnis handelt.

Das gebildete Muster kann nunmehr regelmäßig, aber auch nach dem Zufallsprinzip angeordnet sein. Somit ist ein unregelmäßig angeordnetes Muster deshalb mit hoher Fälschungssicherheit verbunden, da die nach dem Zufallsprinzip angebrachte Strukturierung ausschließlich dem Hersteller bekannt ist. Dieser kann zu Prüfzwecken, wie sie bei der Verpackung von Arzneimitteln erforderlich ist, anhand von Stichproben am Verpackungsmaterial die Identität zwischen Strukturierung an der Verpackungsmaterial-Oberfläche mit jener an der Walzenoberfläche bzw. an entsprechenden Mustern der Metallfolie 1 überprüfen.

Weiters kann nach dem Herstellen der fälschungssicheren Metallfolie die Oberflächenstrukturierung auch durch eine vergleichende optische Messung ermittelt werden. Diese erfolgt beispielsweise mit üblichen Lichtreflexionsmessgeräten.

Die erfindungsgemäß hergestellten Metallfolien können nach deren Oberflächenstrukturierung mit einer transparenten Beschichtung versehen werden. Als transparente Beschichtungen eignen sich Druckfarbengemische sowie Kunststoffkaschierungen, die gegebenenfalls Pigmente aufweisen können. Als Kunststoffkaschierungen eignen sich beispielsweise Polyethylenterephthalat (PET), orientiertes Polyamid (oPA) sowie Kaschierungen aus orientiertem Polypropylen (oPP).

### Gewerbliche Anwendbarkeit

Die erfindungsgemäß hergestellten Metallfolien werden zur Herstellung von Verpackungsmaterial verwendet, wobei sie sich insbesondere als Verpackungsmaterial für Arzneimittel eignen. Bei dieser Verwendung kann der Hersteller oder der Konsument aufgrund der vorgegebenen Strukturierung in der Folienoberfläche auf einfache Weise feststellen, dass er ein ungefälschtes Erzeugnis erworben hat, so dass Fälschungssicherheit aufgrund der erfindungsgemäßen Metallfolie gegeben ist.

## Patentansprüche

1. Verfahren zur Herstellung einer fälschungssicheren Metallfolie (1), welche in einem vorgegebenen Teilbereich (4) ihrer Oberfläche strukturiert ist, wobei dieser Bereich eine im Vergleich mit dem übrigen Oberflächenbereich (5) unterschiedliche Beugung, Streuung, Brechung oder Reflexion von Licht aufweist, **wobei** die Metallfolie durch Walzen mittels Arbeitswalzen (8) hergestellt wird, wodurch sich in Laufrichtung die längs gerichtete Struktur (5) der Walzenoberfläche auf die Oberfläche der Metallfolie überträgt, **dadurch gekennzeichnet dass** an der Walzenoberfläche, beispielsweise durch Schleifen der Walzenoberfläche, eine Strukturierung in Querrichtung zur Laufrichtung derart erzeugt wird, dass sich der **vorgegebene** Teilbereich (4) mit in Längs- und Querrichtung einander kreuzenden, **linienförmigen** Strukturierungen auf der Metallfolie (1) ergibt, welcher eine Änderung in der Lichtbrechung bewirkt.

2. Verfahren nach Anspruch 1, **dadurch gekennzeichnet, dass** der strukturierte Teilbereich (4) nach dem Zufallsprinzip angebracht wird.

3. Verfahren nach Anspruch 1 oder 2, **dadurch gekennzeichnet, dass** die Metallfolie nach der Strukturgebung mit einer transparenten Beschichtung versehen wird.

4. Verfahren nach Anspruch 3, **dadurch gekennzeichnet, dass** die transparente Beschichtung Druckfarben und/oder Kunststoff, sowie gegebenenfalls Additive enthält.

## Claims

1. Method for manufacturing a counterfeit-proof metallic foil (1), which is structured in a predefined partial area (4) of its surface, wherein diffraction, scattering, refraction or reflection of light in this area is different from that in the remaining surface area (5), wherein the metallic foil is manufactured by rolling by means of working rollers (8), thereby causing the longitudinally extending structure (5) of the roller surface to be transferred in running direction onto the surface of the metallic foil, **characterised in that** a structuring is produced transversely to the running direction on the roller surface, for example through grinding of the roller surface, in such a way that on the metallic foil (1) the predefined partial area (4) with lineshaped structures crossing each other in longitudinal as well as transverse direction is obtained, which partial area causes a change in the refraction of light.

2. Method according to claim 1, **characterised in that** the structured partial area (4) is produced according to the principle of chance.

3. Method according to claim 1 or 2, **characterised in that** the metallic foil, after application of the structure, is provided with a transparent coating.

4. Method according to claim 3, **characterised in that** the transparent coating contains printing inks and/or plastic as well as additives, if necessary.

## Revendications

1. Procédé de fabrication d'un film métallique infalsifiable (1) qui est structuré dans une sous-partie prédéfinie(4) de sa surface, cette zone présentant une courbure, dispersion, réfraction ou réflexion de lumière différente de celle du reste de sa zone superficielle (5), le film métallique étant fabriqué par laminage au moyen de rouleaux fonctionnels (8), ce qui transfère la structure (5) orientée longitudinalement dans le sens de roulement de la surface des rouleaux sur la surface du film métallique, **caractérisé en ce qu'**une structuration est créée dans le sens transversal au sens de roulement sur la surface des rouleaux, par exemple par abrasion de la surface des rouleaux de manière à ce que soit obtenue sur le film métallique (1) la sous-partie prédéfinie (4) dotée de structurations linéaires se croisant dans le sens longitudinal et transversal et entraînant une modification de la réfraction de la lumière.

2. Procédé selon la revendication 1, **caractérisé en ce que** la sous-partie structurée (4) est appliquée d'après le principe aléatoire.

3. Procédé selon la revendication 1 ou 2, **caractérisé en ce que** le film métallique est pourvu d'un revêtement transparent après sa structuration.

4. Procédé selon la revendication 3, **caractérisé en ce que** le revêtement transparent contient des encres d'impression et/ou de la matière plastique ainsi que des additifs le cas échéant.
